# EUROPEAN PATENT SPECIFICATION

(11) **EP 2 722 200 B1**
(45) Date of publication and mention of the grant of the patent: **16.05.2018**
(21) Application number: 12802724.0
(22) Date of filing: 20.06.2012
(51) Int. Cl.: B60C 15/04, D07B 1/06

(54) **PNEUMATIC TIRE**
LUFTREIFEN
PNEUMATIQUE

(30) Priority: 20.06.2011 JP 2011136368
(43) Date of publication of application: 23.04.2014
(73) Proprietor: Bridgestone Corporation, Tokyo 104-8340 (JP)
(72) Inventor: WADA, Shogo, Kodaira-shi Tokyo 187-8531 (JP); MIYAZONO, Toshiya, Kodaira-shi Tokyo 187-8531 (JP)
(74) Representative: Oxley, Robin John George
(86) International application number: PCT/JP2012/004008
(87) International publication number: WO 2012/176447

(56) References cited:
- EP-A2- 1 088 686
- JP-A- 6 016 018
- JP-A- 6 143 914
- JP-A- 8 290 703
- JP-A- 2000 071 722
- JP-A- 2001 097 010
- JP-A- 2002 254 909
- JP-A- 2003 118 323
- JP-A- 2009 051 451
- JP-A- 2011 057 105

## Description

### TECHNICAL FIELD

The present invention relates to a pneumatic tire and in particular to a pneumatic tire with a bead core embedded in a bead portion of the tire, which bead core is excellent in fracture strength and bead-expansion force and has a reduced weight.

### BACKGROUND ART

Examples of a bead core embedded in a bead portion of a pneumatic tire include a bead core having what is called a "mono-strand" torus structure formed by winding a strand, i.e. a rubber-coated single bead wire, plural times in a bead portion (e.g. PTL 1).

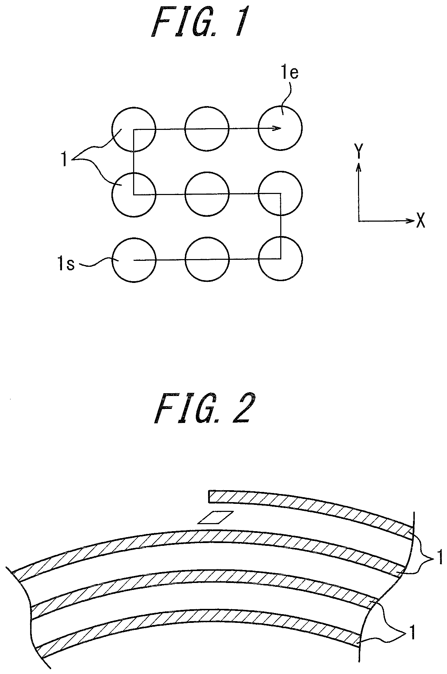

FIG. 1 is a schematic cross sectional view of a mono-strand torus structure of a bead core as described above cut in the axial direction thereof. This mono-strand bead core is constituted by a strand, i.e. a rubber-coated single bead wire 1, juxtaposed in plural columns in the axial direction (the X-axis direction in FIG. 1) and stacked in plural rows in the radial direction (the Y-axis direction in FIG. 1) of the torus structure as shown in FIG. 1.

Such a bead core as described above is generally formed by winding a bead wire from the inner side toward the outer side in the radial direction, as shown by an arrow in FIG. 1, because a winding process of a bead wire is normally carried out with imparting the bead wire with tension. Accordingly, a winding-start end 1s of a bead wire is normally situated on the innermost side and a winding-terminal end 1e is normally situated on the outermost side in the radial direction.
Tensile force is hardly exerted on the respective end portions (the winding-start end Is and the winding-terminal end 1e) of the bead wire due to characteristics of composite materials when a tire with the bead core having the aforementioned structure is inflated at an internal pressure.
It is known that therefore fracture tends to occur at a winding-start end, in particular, due to stress concentration there when a fracture test of a mono-strand bead core is carried out.
Further, there arises another problem in the conventional mono-strand bead core in that bead-expansion force (engaging force between a tire and a rim) decreases when the winding-start end is situated on the innermost side in the radial direction as described above.

Yet further, development of a reduced-weight tire using as few resources as possible has been demanded in recent years in terms of environment protection and, regarding a mono-strand bead core, it is considered to reduce weight thereof by decreasing the numbers of columns in the axial direction and rows in the radial direction of the mono-strand torus structure.
However, there arises a problem in a bead core having a reduced number of columns in the axial direction thereof in that bead-expansion force of the bead core decreases and there arises a problem in a bead core having a reduced numbers of columns in the axial direction and rows in the radial direction thereof in that fracture strength of the bead core decreases. There is therefore a strong demand for developing a bead core being excellent in fracture strength and bead-expansion force in spite of reduced weight thereof.

### CITATION LIST

### Patent Literature

PTL 1: JP-A 2003-025815. Attention is also drawn to the disclosures of EP1,088,686, corresponding with the preamble of claim 1, and JP2009-051,451.

### SUMMARY OF THE INVENTION

### Technical Problems

The present invention aims at solving the problems described above and an object thereof is to provide a pneumatic radial tire with a bead core embedded in a bead portion of the tire, which bead core is excellent in fracture strength and bead-expansion force and has a reduced weight.

### Solution to the Problems

The inventors of the present invention keenly studied to solve the problems described above.
As a result, they revealed that one of the main causes for fracture occurring at a winding-start end position as described above is an increase in tensile force between adjacent bead wires at the position, resulted from shearing deformation of rubber between these bead wires (see FIG. 2) caused by force in the direction of pulling the winding-start end of a bead wire out in the circumferential direction when a tire is inflated at an internal pressure.
On this basis, the inventors of the present invention discovered that in a bead core having a mono-strand torus structure as described above it is possible to enhance fracture strength and bead-expansion force by winding a strand to eventually form a U-shaped configuration with the winding-start end and the winding-terminal end thereof both situated in the outermost side in the radial direction. Such a bead core having a U-shaped cross sectional configuration as this can also reduce weight because the bead core has a two-column structure in the axial direction, thereby significantly narrowing the width of a bead portion as a whole.
Further, the inventors of the present invention newly discovered that an increase in tensile force between the adjacent bead wires at each of the end portions (i.e. the winding-start end and the winding-terminal end) of the bead wire due to shearing deformation of rubber described above can be suppressed, to enhance fracture strength of the bead core, by increasing an interval between the end portion and a bead wire constituting a layer adjacent to the end portion.

The present invention has been contrived based on the aforementioned discoveries and main structural features are defined by independent claim 1. Preferred embodiments are defined by dependent claims 2 to 6.

### Advantageous Effect of the Invention

According to the present invention, it is possible to manufacture a bead core excellent in fracture strength and bead-expansion force and use the bead core in a bead portion of a pneumatic radial tire.
Further, according to the present invention, it is possible to reduce weight of the pneumatic radial tire by embedding the bead core having reduced weight in the bead portion of the tire.

### BRIEF DESCRIPTION OF THE DRAWINGS

FIG. 1 is a cross sectional view explaining a bead core for use in a conventional pneumatic tire.
FIG. 2 is a view explaining tensile force exerted on an inner peripheral layer adjacent to an end portion of a bead wire.
FIG. 3 is a cross sectional view explaining one example of a bead core for use in a pneumatic tire of the present invention.
FIG. 4 is a view explaining an interval between an end portion and an inner peripheral layer adjacent to the end portion of a bead wire.
FIG. 5 is a cross sectional view showing one example of a bead core for use in a Comparative Example tire.
FIG. 6 is a cross sectional view explaining another example of the bead core for use in a pneumatic tire of the present invention.
FIG. 7 is a cross sectional view explaining yet another example of the bead core for use in a pneumatic tire of the present invention.
FIG. 8 is a cross sectional view explaining another example of the bead core for use in a Comparative Example pneumatic tire.

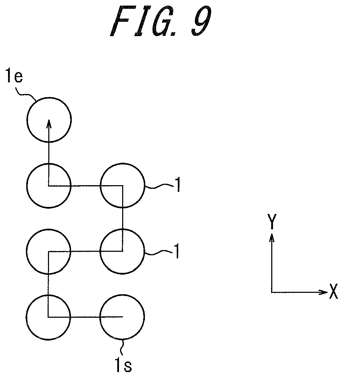

FIG. 9 is a cross sectional view explaining yet another example of the bead core for use in a Comparative Example pneumatic tire.

### DESCRIPTION OF THE EMBODIMENTS

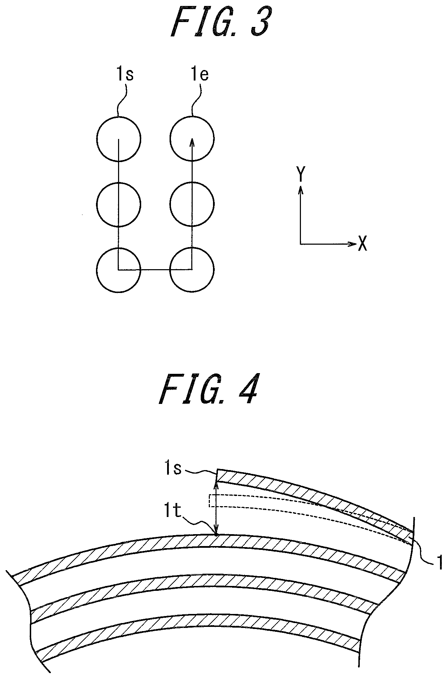

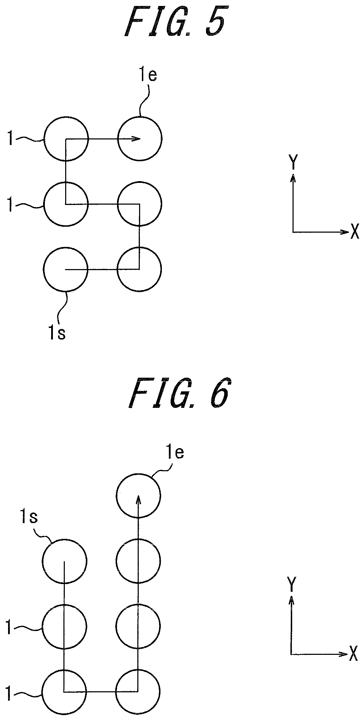

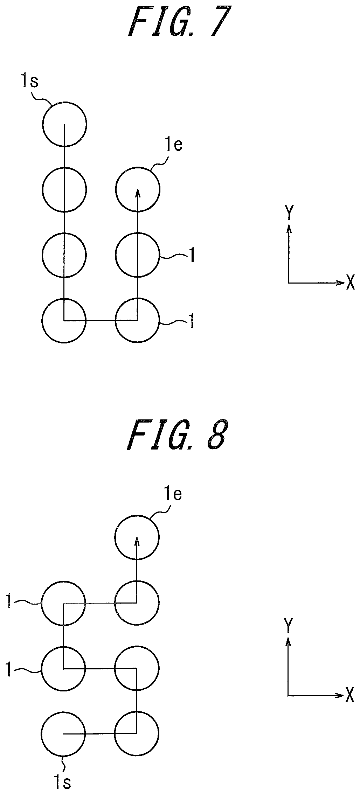

FIG. 3 is a cross sectional view of one example of a bead core for use in a pneumatic tire of the present invention.
This bead core has a torus structure formed by winding a strand as a rubber-coated single bead wire 1 (around a bead portion) to be juxtaposed in two columns in the axial direction of the torus structure, as shown in FIG. 3.
Further, the strand is stacked in plural rows (three rows in the example of FIG. 3) in the radial direction of the torus structure in the bead core.
Yet further, a winding-start end Is and a winding-terminal end 1e are situated on the outermost side in the radial direction of the respective columns in the bead core.
Such a bead core as described above can be manufactured by winding the strand or the bead wire 1 from the outer side toward the inner side in the radial direction at one column and then from the inner side toward the outer side in the radial direction at the other column (see the arrow indicating the winding order in FIG. 3).
The number of rows in the radial direction in the one column in the axial direction may differ from the number of rows in the radial direction in the other column in the axial direction, as shown in FIG. 6 and FIG. 7, respectively. Such bead cores as shown in FIGS. 6 and 7 can be each manufactured by winding the strand or the bead wire 1 from the outer side toward the inner side in the radial direction at one column and then from the inner side toward the outer side in the radial direction at the other column, as is the case with the example shown in FIG. 3 (see the arrows indicating the winding orders in FIG. 6 and FIG. 7).

FIG. 4 is a view showing a vicinity of an end portion of the bead wire 1 of the bead core shown in FIG. 3.
It is essentially important in the bead core for use in a tire of the present invention that at least one of an interval 1t between the winding-start end 1s and an inner peripheral layer adjacent to the winding-start end 1s of the bead wire and an interval between the winding-terminal end 1e and an inner peripheral layer adjacent to the winding-terminal end 1e of the bead wire is larger than any other intervals between two adjacent bead wires (i.e. any other interlayer intervals between one bead wire layer and another bead wire layer on the inner side in the radial direction than the radially outermost interval 1t of the bead core), as shown in FIG. 4.
An effect of the present invention, caused by the aforementioned structures, will be described hereinafter.

First, according to the present invention, since at least one of an interval between the winding-start end and an inner peripheral layer adjacent to the winding-start end of the bead wire and an interval between the winding-terminal end and an inner peripheral layer adjacent to the winding-terminal end of the bead wire is relatively large, it is possible to suppress an increase in tensile force between the two adjacent bead wires when the increase occurs due to shearing deformation of rubber described above, thereby enhancing fracture strength of the bead core.

Further, according to the present invention, it is possible to mitigate concentration of stresses at the winding-start end and the winding-terminal end to enhance fracture strength of the bead core because the winding-start end and the winding-terminal end are each situated on the outermost side in the radial direction of the bead core.
Yet further, according to the present invention, bead-expansion force of the bead core also enhances because neither the winding-start end nor the winding-terminal end are situated on the inner side in the radial direction.

Yet further, according to the present invention, since the bead core has a torus structure constituted of only two columns of the strand juxtaposed in the axial direction of the torus structure and thus the bead core has a significantly narrowed width, it is possible to reduce tire weight by using the bead core in a bead portion of a tire.

Yet further, in terms of a manufacturing aspect of the bead core, the winding-start end and the winding-terminal end can be each easily positioned on the outermost side in the radial direction by winding the strand from the outer side toward the inner side in the radial direction at one column and then from the inner side toward the outer side in the radial direction at the other column as described above because the bead core as the torus structure is constituted of two columns of the strand juxtaposed in the axial direction.
In this connection, it is possible in manufacturing the bead core to prevent the winding-start end and the winding-terminal end thereof from being interfered by other bead wire layers, to enhance work efficiency and easily control an inter-wire distance between each of the winding-start end and the winding-terminal end and an inner peripheral bead wire layer adjacent thereto, because the winding-start end and the winding-terminal end are each situated on the outermost side in the radial direction of the bead core.
The bead core for use in the tire of the present invention therefore has a merit of production easiness, as well.

In the present invention, the interval between the winding-start end and an inner peripheral layer adjacent to the winding-start end, of the bead wire, is larger than any of the other intervals between two adjacent bead wires of the bead core.
The arrangement above is preferable because it can mitigate shearing deformation of rubber between the bead wires caused by force in the direction of pulling the winding-start end out in the circumferential direction
Further, it is preferable that the interval between the winding-terminal end and an inner peripheral layer adjacent to the winding-terminal end of the bead wire, as well as the interval between the winding-start end and an inner peripheral layer adjacent to the winding-start end of the bead wire, is larger than any other intervals between two adjacent bead wires of the bead core.
The arrangement above is preferable because it can suppress an increase in tensile force between adjacent bead wires at the respective end portions thereof when the increase occurs due to shearing deformation of rubber between each end portion and an inner peripheral layer adjacent thereto of the bead wire, thereby successfully enhancing fracture strength of the bead core.

Yet further, in the present invention, the interval between the winding-start end and an inner peripheral layer adjacent to the winding-start end, of the bead wire, is larger than any other intervals between two adjacent bead wires of the bead core preferably in a range from the winding-start end to at least a position on the bead wire 5 mm away from the winding-start end along a circumference of the bead wire but not beyond a position on the bead wire away by one circumference from the winding-start end.
In other words, a range in which the interval between the winding-start end and an inner peripheral layer adjacent to the winding-start end, of the bead wire, is larger than any other intervals between two adjacent bead wires of the bead core is set preferably from the winding-start end to at least a position on the bead wire 5 mm away from the winding-start end along a circumference of the bead wire but not beyond a position on the bead wire away by one circumference from the winding-start end.
The arrangement above is preferable because: when the aforementioned range in which the interval between the winding-start end and an inner peripheral layer adjacent thereto is larger than any other intervals between two adjacent bead wires is situated on the bead wire less than 5 mm away from the winding-start end along a circumference of the bead wire, the shearing deformation of rubber described above cannot be sufficiently mitigated; and when the aforementioned range is situated on the bead wire away, by more than one circumference, from the winding-start end, an effect of mitigating shearing deformation of rubber reaches a plateau and no longer improves.
In the present invention, a circumferential length of "one circumference" of the bead wire is defined, provided that a position 1t on the inner peripheral layer adjacent to the winding-start end 1s of the bead wire corresponds to or faces the winding-start end 1s as shown in FIG. 4, as a circumferential length measured from the winding-start end 1s to the position 1t.

Similarly, in the present invention, the interval between the winding-terminal end and an inner peripheral layer adjacent to the winding-terminal end, of the bead wire, is larger than any other intervals between two adjacent bead wires of the bead core preferably in a range from the winding-terminal end to at least a position on the bead wire 5 mm away from the winding-terminal end along a circumference of the bead wire but not beyond a position on the bead wire away by one circumference from the winding-terminal end.
In other words, a range in which the interval between the winding-terminal end and an inner peripheral layer adjacent to the winding-terminal end, of the bead wire, is larger than any other intervals between two adjacent bead wires of the bead core is set preferably from the winding-terminal end to at least a position on the bead wire 5 mm away from the winding-terminal end along a circumference of the bead wire but not beyond a position on the bead wire away by one circumference from the winding-terminal end.
The arrangement above is preferable because: when the aforementioned range in which the interval between the winding-terminal end and an inner peripheral layer adjacent thereto is larger than any other intervals between two adjacent bead wires is situated on the bead wire less than 5 mm away from the winding-terminal end along a circumference of the bead wire, the shearing deformation of rubber described above cannot be sufficiently mitigated; and when the aforementioned range is situated on the bead wire away, by more than one circumference, from the winding-terminal end, an effect of mitigating shearing deformation of rubber reaches a plateau and no longer improves.
In the present invention, a circumferential length of "one circumference" of the bead wire is defined, provided that a position on the inner peripheral layer adjacent to the winding-terminal end of the bead wire corresponds to or faces the winding-terminal end, as a circumferential length measured from the winding-terminal end to the position.

Further, in the present invention, a distance between the centers of the two adjacent bead wires in the aforementioned range from the winding-start end to at least a position on the bead wire 5 mm away from the winding-start end along a circumference of the bead wire but not beyond a position on the bead wire away by one circumference from the winding-start end is preferably 1.2 to 5 times larger than a distance between the centers of the two adjacent bead wires at a position beyond said range.
In other words, a distance between the centers of the two adjacent bead wires in the range in which the interval between the winding-start end and an inner peripheral layer adjacent thereto of the bead wire is larger than any other intervals between two adjacent bead wires of the bead core is preferably 1.2 to 5 times larger than a distance between the centers of the two adjacent bead wires at a position beyond said range.
The arrangement above is preferable because: when a distance between the centers of the two adjacent bead wires in the aforementioned range is at least 1.2 times larger than a distance between the centers of the two adjacent bead wires at a position beyond said range, at least an effect at the minimum level required in the present invention can be ensured by a relatively small change in the bead core configuration; and when a distance between the centers of the two adjacent bead wires in the aforementioned range is not more than 5 times larger than a distance between the centers of the two adjacent bead wires at a position beyond said range, it is possible to suppress an adverse effect possibly caused on uniformity of the bead core by an unbalanced cross section of the bead core to the minimum, while sufficiently mitigating shearing deformation of rubber between the relevant bead wires.

Similarly, in the present invention, a distance between the centers of the two adjacent bead wires in the aforementioned range from the winding-terminal end to at least a position on the bead wire 5 mm away from the winding-terminal end along a circumference of the bead wire but not beyond a position on the bead wire away by one circumference from the winding-terminal end is preferably 1.2 to 5 times larger than a distance between the centers of the two adjacent bead wires at a position beyond said range.
In other words, a distance between the centers of the two adjacent bead wires in the range in which the interval between the winding-terminal end and an inner peripheral layer adjacent thereto of the bead wire is larger than any other intervals between two adjacent bead wires of the bead core is preferably 1.2 to 5 times larger than a distance between the centers of the two adjacent bead wires at a position beyond said range.
The arrangement above is preferable because: when a distance between the centers of the two adjacent bead wires in the aforementioned range is at least 1.2 times larger than a distance between the centers of the two adjacent bead wires at a position beyond said range, at least an effect at the minimum level required in the present invention can be ensured by a relatively small change in the bead core configuration; and when a distance between the centers of the two adjacent bead wires in the aforementioned range is not more than 5 times larger than a distance between the centers of the two adjacent bead wires at a position beyond said range, it is possible to suppress an adverse effect possibly caused on uniformity of the bead core by an unbalanced cross section of the bead core to the minimum, while sufficiently mitigating shearing deformation of rubber between the relevant bead wires.

### Examples

In order to confirm an effect of the present invention, each of pneumatic test tires for Examples 1 to 3 was prepared by: manufacturing a corresponding bead core where two columns of a bead wire is juxtaposed in the axial direction, a winding-start end and a winding-terminal end of the bead wire are each situated on the outermost side in the radial direction, and at least one of an interval between the winding-start end and an inner peripheral layer adjacent to the winding-start end of the bead wire and an interval between the winding-terminal end and an inner peripheral layer adjacent to the winding-terminal end of the bead wire is larger than any other intervals between two adjacent bead wires of the bead core; and embedding the bead core in a bead portion of a tire.
Further, a pneumatic test tire for Comparative Example 1 was prepared by: manufacturing a corresponding bead core where two columns of a bead wire is juxtaposed in the axial direction and a winding-start end and a winding-terminal end of the bead wire are situated on the innermost side and the outermost side in the radial direction, respectively, as shown in FIG. 5; and embedding the bead core in a bead portion of a tire.
Yet further, a pneumatic test tire for Comparative Example 2 was prepared by: manufacturing a corresponding bead core where two columns of a bead wire is juxtaposed in the axial direction, a winding-start end and a winding-terminal end of the bead wire are each situated on the outermost side in the radial direction, but an interval between the winding-start end and an inner peripheral layer adjacent thereto of the bead wire and an interval between the winding-terminal end and an inner peripheral layer adjacent thereto of the bead wire is each equal to other intervals between two adjacent bead wires of the bead core; and embedding the bead core in a bead portion of a tire.
Table 1 shows details of the characteristics of the respective test tires.
In Examples 1 and 2, a range in which the interval between the winding-start end and an inner peripheral layer adjacent thereto of the bead wire is larger than any other intervals between two adjacent bead wires of the bead core was set from the winding-start end to a position on the bead wire 5 mm away from the winding-start end along a circumference of the bead wire; and a range in which the interval between the winding-terminal end and an inner peripheral layer adjacent thereto of the bead wire is larger than any other intervals between two adjacent bead wires of the bead core was set from the winding-terminal end to a position on the bead wire 5 mm away from the winding-terminal end along a circumference of the bead wire.
In Examples 1 to 3, a circumferential length of "one circumference" of the bead wire is 1045 mm on each of the winding-start end side and the winding-terminal end side.

**Table 1**

| | Figure | Number of columns in the axial direction | Number of rows in the radial direction | Radial position of winding-start end | Radial position of winding-terminal end | Interval between winding-start end and inner peripheral layer adjacent thereto | Interval between winding-terminal end and inner peripheral layer adjacent thereto |
|---|---|---|---|---|---|---|---|
| Example 1 | Fig. 3 | 2 | 3 | Outermost side | Outermost side | Larger than intervals between other adjacent bead wires | Larger than intervals between other adjacent bead wires |
| Example 2 | Fig. 3 | 2 | 3 | Outermost side | Outermost side | Larger than intervals between other adjacent bead wires | Equal to intervals between other adjacent bead wires |
| Example 3 | Fig. 3 | 2 | 3 | Outermost side | Outermost side | Equal to intervals between other adjacent bead wires | Larger than intervals between other adjacent bead wires |
| Comp. Example 1 | Fig. 5 | 2 | 3 | Innermost side | Outermost side | Equal to intervals between other adjacent bead wires | Equal to intervals between other adjacent bead wires |
| Comp. Example 2 | Fig. 3 | 2 | 3 | Outermost side | Outermost side | Equal to intervals between other adjacent bead wires | Equal to intervals between other adjacent bead wires |

Following tests were carried out for each of the aforementioned test tires.

### <Fracture strength>

Fracture strength of the test tire (tire size: 155/65R13) was evaluated by a hydraulic fracture test including the steps of assembling the tire with a prescribed rim having rim size: 13 × 4.5J, injecting water into the tire, and measuring hydraulic pressure when the bead core is fractured.

The evaluation results are expressed as index values relative to the reference value "100" for Comparative Example 1. The larger value represents the higher fracture strength of the sample.

### <Bead-expansion force>

Bead-expansion force of the test tire was evaluated by: disposing a bead portion of one side of the pneumatic tire to be tested on an eight-divided rim block of a bead-expansion force tester manufactured by Hoffmann Corporation; measuring a magnitude of change in the bead portion of the tire when the bead portion is expanded toward the outer side in the radial direction; and converting the magnitude of change in the bead portion thus measured into an index value representing bead-expansion force of the tire, for evaluation.

The evaluation results are expressed as index values relative to the reference value "100" for the bead-expansion force of Comparative Example 1. The larger value represents the higher bead-expansion force of the sample.

The evaluation results of these two tests are shown in Table 2.

**Table 2**

| | Bead-expansion force | Fracture strength |
|---|---|---|
| Example 1 | 130 | 105 |
| Example 2 | 130 | 103 |
| Example 3 | 130 | 103 |
| Comp. Example 1 | 100 | 100 |
| Comp. Example 2 | 130 | 100 |

It is understood from Table 2 that the test tires of Examples 1 to 3 are unanimously more excellent in both bead-expansion force and fracture strength than the test tire of Comparative Example 1 and unanimously more excellent in fracture strength than the test tire of Comparative Example 2.

Next, a test tire for Conventional Example was prepared by embedding the conventional bead core shown in FIG. 1 in a bead portion of a tire. Tire weight was measured for each of the test tires of Example 1 and Conventional Example. The evaluation results expressed as index values relative to the reference value "100" for the tire weight of Conventional Example are shown in Table 3 below. The smaller value represents the more reduced tire weight of the sample.

**Table 3**

| | Tire weight |
|---|---|
| Example 1 | 98 |
| Conventional Example | 100 |

It is understood from Table 3 that the test tire of Example 1, having narrower width of the bead core, exhibits more reduced tire weight than the test tire of Conventional Example.

Next, each of test tires for Examples 4 to 13 was prepared by changing either a ratio of a distance between the centers of the two adjacent bead wires at the winding-start end, with respect to a distance between the centers of other two adjacent bead wires, of the bead core ("Ratio of between-center distance on the winding-start end side" in Table 4) or a ratio of a distance between the centers of the two adjacent bead wires at the winding-terminal end, with respect to the distance between the centers of other two adjacent bead wires, of the bead core ("Ratio of between-center distance on the winding-terminal end side" in Table 4). Each of these test tires was subjected to a test for evaluating fracture strength in a manner similar to the foregoing Examples and Comparative Examples. Details of the characteristics and evaluation results of the test tires for Examples 4 to 13 are shown in Table 4.
The evaluation results are expressed in FIG. 4 as index values relative to the reference value "100" for Comparative Example 1. The larger value represents the higher fracture strength of the sample.
Each of the test tires of Examples 4 to 13 is substantially the same as the tire of Example 1, except that the former has the characteristics shown in Table 4.

**Table 4**

| | Ratio of between-center distance on the winding-start end side | Ratio of between-center distance on the winding-terminal end side | Fracture strength |
|---|---|---|---|
| Example 4 | 1.1 | 1 | 101 |
| Example 5 | 1.2 | 1 | 102 |
| Example 6 | 3 | 1 | 103 |
| Example 7 | 5 | 1 | 104 |
| Example 8 | 6 | 1 | 104 |
| Example 9 | 1 | 1.1 | 101 |
| Example 10 | 1 | 1.2 | 102 |
| Example 11 | 1 | 3 | 103 |
| Example 12 | 1 | 5 | 104 |
| Example 13 | 1 | 6 | 104 |

It is understood from Table 4 that the test tires of Examples 5 to 7 and Examples 10 to 12, each having an optimum ratio of a distance between the centers of the two adjacent bead wires at the winding-start/terminal end with respect to the distance between the centers of other two adjacent bead wires, unanimously exhibit better fracture strength than the test tire of Conventional Example 1.
Further, it is understood from comparison of Example 7 with Example 8 and comparison of Example 12 with Example 13, respectively, that setting either "Ratio of between-center distance on the winding-start end side" or "Ratio of between-center distance on the winding-terminal end side" to be 5 suffices to satisfactorily improve fracture strength of the bead core. Accordingly, setting either "Ratio of between-center distance on the winding-start end side" or "Ratio of between-center distance on the winding-terminal end side" to be around but not larger than 5 will effectively suppress an adverse effect on uniformity of the bead core, while satisfactorily improving fracture strength of the bead core.

### REFERENCE SIGNS LIST

- 1: Bead wire
- Is: Winding-start end
- le: Winding-terminal end

## Claims

1. A pneumatic tire having a bead core embedded in a bead portion of the tire, the bead core being constituted of a strand as a rubber-coated single bead wire (1) wound around the bead portion to be juxtaposed in plural columns in the axial direction and stacked in plural rows in the radial direction to form a torus structure, wherein
the bead core as the torus structure is constituted of two columns of the bead wire juxtaposed in the axial direction; **characterized in that**
a winding-start end (1s) and a winding-terminal end (1e) of the bead wire are situated at the outermost rows in the radial direction of the corresponding columns thereof, respectively; and **in that**
an interval (1t) between the winding-start end and an inner peripheral layer adjacent to the winding-start end of the bead wire is larger than any of the other intervals between two adjacent bead wires of the bead core.

2. The pneumatic tire of claim 1, wherein the interval between the winding-start end and an inner peripheral layer adjacent to the winding-start end of the bead wire and the interval between the winding-terminal end and an inner peripheral layer adjacent to the winding-terminal end of the bead wire are each larger than any of the other intervals between two adjacent bead wires of the bead core.

3. The pneumatic tire of claim 1 or 2, wherein the interval between the winding-start end and an inner peripheral layer adjacent to the winding-start end, of the bead wire, is larger than any other intervals between two adjacent bead wires of the bead core in a range from the winding-start end to at least a position on the bead wire 5 mm away from the winding-start end along a circumference of the bead wire but not beyond a position on the bead wire away by one circumference from the winding-start end.

4. The pneumatic tire of claim 2, wherein the interval between the winding-terminal end and an inner peripheral layer adjacent to the winding-terminal end, of the bead wire, is larger than any other intervals between two adjacent bead wires of the bead core in a range from the winding-terminal end to at least a position on the bead wire 5 mm away from the winding-terminal end along a circumference of the bead wire but not beyond a position on the bead wire away by one circumference from the winding-terminal end.

5. The pneumatic tire of claim 3, wherein a distance between the centers of the two adjacent bead wires in said range in which the interval between the winding-start end and an inner peripheral layer adjacent to the winding-start end, of the bead wire, is larger than any other intervals between two adjacent bead wires of the bead core is 1.2 to 5 times larger than a distance between the centers of the two adjacent bead wires at a position beyond said range.

6. The pneumatic tire of claim 4, wherein a distance between the centers of the two adjacent bead wires in said range in which the interval between the winding-terminal end and an inner peripheral layer adjacent to the winding-terminal end, of the bead wire, is larger than any other intervals between two adjacent bead wires of the bead core is 1.2 to 5 times larger than a distance between the centers of the two adjacent bead wires at a position beyond said range.

## Patentansprüche

1. Luftreifen, der einen Wulstkern hat, der in einem Wulstabschnitt des Reifens eingebettet ist, wobei der Wulstkern aus einem Strang wie einem einzelnen gummiüberzogenen Wulstdraht (1) besteht, der so um den Wulstabschnitt gewickelt ist, dass er in mehreren Spalten in der Axialrichtung nebeneinandergelegt und in mehreren Zeilen in der Radialrichtung gestapelt ist, um eine Torusstruktur zu bilden, wobei
der Wulstkern als die Torusstruktur aus zwei Spalten des Wulstdrahts besteht, die in der Axialrichtung nebeneinandergelegt sind, **dadurch gekennzeichnet, dass**
ein Wicklungsbeginnende (1s) und ein Wicklungsabschlussende (1e) des Wulstdrahts jeweils an den äußersten Zeilen in der Radialrichtung der entsprechenden Spalten desselben angeordnet sind, und dadurch, dass
ein Abstand (1t) zwischen dem Wicklungsbeginnende und einer Innenumfangslage angrenzend an das Wicklungsbeginnende des Wulstdrahts größer ist als ein beliebiger der anderen Abstände zwischen zwei benachbarten Wulstdrähten des Wulstkerns.

2. Luftreifen nach Anspruch 1, wobei der Abstand zwischen dem Wicklungsbeginnende und einer Innenumfangslage angrenzend an das Wicklungsbeginnende des Wulstdrahts und der Abstand zwischen dem Wicklungsabschlussende und einer Innenumfangslage angrenzend an das Wicklungsabschlussende des Wulstdrahts jeweils größer sind als ein beliebiger der anderen Abstände zwischen zwei benachbarten Wulstdrähten des Wulstkerns.

3. Luftreifen nach Anspruch 1 oder 2, wobei der Abstand zwischen dem Wicklungsbeginnende und einer Innenumfangslage angrenzend an das Wicklungsbeginnende des Wulstdrahts größer ist als beliebige andere Abstände zwischen zwei benachbarten Wulstdrähten des Wulstkerns in einem Bereich von dem Wicklungsbeginnende bis zu wenigstens einer Position auf dem Wulstdraht, 5 mm entfernt von dem Wicklungsbeginnende, entlang eines Umfangs des Wulstdrahts, aber nicht jenseits einer Position auf dem Wulstdraht, um einen Umfang entfernt von dem Wicklungsbeginnende.

4. Luftreifen nach Anspruch 2, wobei der Abstand zwischen dem Wicklungsabschlussende und einer Innenumfangslage angrenzend an das Wicklungsabschlussende des Wulstdrahts größer ist als ein beliebiger der anderen Abstände zwischen zwei benachbarten Wulstdrähten des Wulstkerns in einem Bereich von dem Wicklungsabschlussende bis zu wenigstens einer Position auf dem Wulstdraht, 5 mm entfernt von dem Wicklungsabschlussende, entlang eines Umfangs des Wulstdrahts, aber nicht jenseits einer Position auf dem Wulstdraht, um einen Umfang entfernt von dem Wicklungsabschlussende.

5. Luftreifen nach Anspruch 3, wobei ein Abstand zwischen den Mitten der zwei benachbarten Wulstdrähte in dem Bereich, in dem der Abstand zwischen dem Wicklungsbeginnende und einer Innenumfangslage angrenzend an das Wicklungsbeginnende des Wulstdrahts größer ist als beliebige andere Abstände zwischen zwei benachbarten Wulstdrähten des Wulstkerns, 1,2- bis 5-mal größer ist als ein Abstand zwischen den Mitten der zwei benachbarten Wulstdrähte an einer Position jenseits des Bereichs.

6. Luftreifen nach Anspruch 4, wobei ein Abstand zwischen den Mitten der zwei benachbarten Wulstdrähte in dem Bereich, in dem der Abstand zwischen dem Wicklungsabschlussende und einer Innenumfangslage angrenzend an das Wicklungsabschlussende des Wulstdrahts größer ist als beliebige andere Abstände zwischen zwei benachbarten Wulstdrähten des Wulstkerns, 1,2- bis 5-mal größer ist als ein Abstand zwischen den Mitten der zwei benachbarten Wulstdrähte an einer Position jenseits des Bereichs.

## Revendications

1. Bandage pneumatique comportant une tringle noyée dans une partie de talon du bandage pneumatique, la tringle étant constituée par un toron sous forme d'un seul fil de tringle revêtu de caoutchouc (1) enroulé autour de la partie de talon de sorte à être juxtaposé dans plusieurs colonnes dans la direction axiale et empilé dans plusieurs rangées dans la direction radiale, pour former une structure de tore, dans lequel :
la tringle, sous forme de la structure en tore, est constituée de deux colonnes de fil de tringle juxtaposées dans la direction axiale ; **caractérisé en ce que** :
une extrémité de début de l'enroulement (1s) et une extrémité terminale de l'enroulement (1e) du fil de tringle sont situées respectivement au niveau des rangées les plus externes, dans la direction radiale des colonnes correspondantes de celles-ci ; et **en ce que** :
un intervalle (1t) entre l'extrémité de début de l'enroulement et une couche périphérique interne adjacente à l'extrémité de début de l'enroulement du fil de tringle est plus grand qu'un quelconque des autres intervalles entre deux fils de tringle adjacents de la tringle.

2. Bandage pneumatique selon la revendication 1, dans lequel l'intervalle entre l'extrémité de début de l'enroulement et une couche périphérique interne adjacente à l'extrémité de début de l'enroulement du fil de tringle et l'intervalle entre l'extrémité terminale de l'enroulement et une couche périphérique interne adjacente à l'extrémité terminale de l'enroulement du fil de tringle sont chacun plus grands qu'un quelconque des autres intervalles entre deux fils de tringle adjacents de la tringle.

3. Bandage pneumatique selon les revendications 1 ou 2, dans lequel l'intervalle entre l'extrémité de début de l'enroulement et une couche périphérique interne adjacente à l'extrémité de début de l'enroulement du fil de tringle est plus grand que de quelconques autres intervalles entre deux fils de tringle adjacents de la tringle, dans un intervalle allant de l'extrémité de début de l'enroulement vers au moins une position sur le fil de tringle éloignée de 5 mm de l'extrémité de début de l'enroulement, le long d'une circonférence du fil de tringle, mais non pas au-delà d'une position sur le fil de tringle éloignée d'une circonférence de l'extrémité de début de l'enroulement.

4. Bandage pneumatique selon la revendication 2, dans lequel l'intervalle entre l'extrémité terminale de l'enroulement et une couche périphérique interne adjacente à l'extrémité terminale de l'enroulement du fil de tringle, est plus grand que de quelconques autres intervalles entre deux fils de tringle adjacents de la tringle, dans une plage allant de l'extrémité terminale de l'enroulement vers au moins une position sur le fil de tringle éloignée de 5 mm de l'extrémité terminale de l'enroulement, le long d'une circonférence du fil de tringle, mais non pas au-delà d'une position sur le fil de tringle éloignée d'une circonférence de l'extrémité terminale de l'enroulement.

5. Bandage pneumatique selon la revendication 3, dans lequel une distance entre les centres des deux fils de tringle adjacents dans ladite plage dans laquelle l'intervalle entre l'extrémité de début de l'enroulement et une couche périphérique interne adjacente à l'extrémité de début de l'enroulement du fil de tringle est plus grand que de quelconques autres intervalles entre deux fils de tringle adjacents de la tringle, représente 1,2 à 5 fois une distance entre les centres des deux fils de tringle adjacents au niveau d'une position située au-delà de ladite plage.

6. Bandage pneumatique selon la revendication 4, dans lequel une distance entre les centres des deux fils de tringle adjacents dans ladite plage, dans laquelle l'intervalle entre l'extrémité terminale de l'enroulement et une couche périphérique interne adjacente à l'extrémité terminale de l'enroulement du fil de tringle, est plus grand que de quelconques autres intervalles entre deux fils de tringle adjacents de la tringle, représente 1,2 à 5 fois une distance entre les centres des deux fils de tringle adjacents au niveau d'une positon située au-delà de ladite plage.
